# EUROPÄISCHE PATENTSCHRIFT

(11) **EP 3 725 694 B1**
(45) Veröffentlichungstag und Bekanntmachung des Hinweises auf die Patenterteilung: **28.08.2024**
(21) Anmeldenummer: 20156441.6
(22) Anmeldetag: 10.02.2020
(51) Int. Cl.: B65B 69/00

(54) **VORRICHTUNG ZUM ENTLEEREN VON SCHÜTTGÜTERN AUS EINEN BEHÄLTER IN EINEN SCHLAUFÖRMIGEN BEHÄLTERSACK**
DEVICE FOR EMPTYING BULK MATERIAL FROM A CONTAINER IN A SLOPED CONTAINER BAG
DISPOSITIF POUR VIDER DES MATIÈRES EN VRAC D'UN RÉCIPIENT DANS UN RÉCIPIENT EN PENTE

(30) Priorität: 18.04.2019 DE 102019110413
(43) Veröffentlichungstag der Anmeldung: 21.10.2020
(73) Patentinhaber: J. Engelsmann AG, 67059 Ludwigshafen am Rhein (DE)
(72) Erfinder: Kiehl, Marc, 67227 Frankenthal (DE); Kretzu, Christian, 67480 Edenkoben (DE); Bastone, Gianluca, 67061 Ludwigshafen (DE); Quihdt, Viktor, 67433 Neustadt an der Weinstrasse (DE); Liedtke, Joachim, 68163 Mannheim (DE)
(74) Vertreter: Habermann Intellectual Property Partnerschaft von Patentanwälten mbB

(56) Entgegenhaltungen:
- EP-B1- 3 041 749

## Beschreibung

Die Erfindung betrifft eine Vorrichtung zum Entleeren von Schüttgütern aus einem Behälter in einen schlauchförmigen Behältersack, der in einem Aufnahmeteil oder Auffanggehäuse aufgenommen und dessen eines oberes Ende nach dem Umfüllvorgang verschlossen werden kann, während das zweite oder untere Ende des Behältersacks mit Hilfe von mindestens drei mit Bezug auf eine Mittelachse des Auffanggehäuses koaxial angeordneten Dichtungsringen derart verschlossen werden kann, dass insbesondere auch sehr kleine Partikel nicht nach außen in die Umgebungsluft abgegeben werden, wobei die einzelnen druckbeaufschlagbaren Dichtungsringe jeweils versetzt zueinander angeordnet sind und.

Es ist bereits aus der [EP3041749B1] eine Vorrichtung zum Umfüllen von Prozessmaterial zwischen einem ersten Behältnis (A) und einem zweiten Behältnis (B) mit: a) zumindest einer Spanneinheit bekannt, die einen ersten Spanner und einen zweiten Spanner aufweist, die voneinander unabhängig betätigbar sind; wobei: b) die zumindest eine Spanneinheit dazu bestimmt ist, temporär abgedichtet zu fixieren: ba) allein einen der betreffenden Spanneinheit zugewandten Endabschnitt eines schlauchförmigen Linerstücks, das sich indirekt zwischen den Behältnissen (A,B) erstreckt, um den Übergang zwischen den Behältnissen (A,B) nach außen abzudichten; bb) allein einen der betreffenden Spanneinheit zugewandten Endabschnitt eines von einem vorherigen Umfüllvorgang stammenden schlauchförmigen Linerrests, der am anderen Ende mit einer ersten Abcrimpung verschlossen ist, - wobei an der Abbindestelle "crimpen" bedeutet, eine spezielle Art Folienschläuche zu verschließen; und bc) den einen Endabschnitt des -Linerstücks zugleich mit dem einen Endabschnitt des von einem vorherigen Umfüllvorgang stammenden Linerrests; und c) beide Spanner der jeweiligen Spanneinheit, dazu bestimmt sind, temporär gemeinsam den zugewandten Endabschnitt des Linerstücks oder gemeinsam den zugewandten Endabschnitt des von einem vorherigen Umfüllvorgang stammenden Linerrests abgedichtet zu fixieren; dadurch gekennzeichnet, dass d) beide Spanner der jeweiligen Spanneinheit zirkulär und in Relation zur Längserstreckung des Linerstücks zueinander konzentrisch angeordnet sind.

Der Erfindung liegt die Aufgabe zugrunde, die Vorrichtung auf einfache und kostengünstige Weise herzustellen und die Vorrichtung zum Entleeren von Schüttgütern aus einem Behälter in einen schlauchförmigen Behältersack so zu gestalten, dass die hierzu verwendeten Ringdichtungen einfach zu aktivieren und/oder zu verstellen sind, so dass weitgehend auch die kleinsten Partikel nicht in die Umgebungsluft gelangen.

Die Aufgabe wird erfindungsgemäß dadurch gelöst, dass der in Füllrichtung gesehen obere oder erste Dichtungsring mit einem Deckel oder Ringflansch und der mittlere oder zweite Dichtungsring mit einem Stutzen oder Anschlussteil für das Auffanggehäuse und der darunter liegende dritte, versetzt angeordnete Dichtungsring mit dem Deckel oder Ringflansch in Kontakt steht, wobei der schlauchförmige Teil des Behältersacks zwischen die eine Seite des dritten oder unteren Dichtungsrings und der gegenüberliegenden Wand des Aufnahmeteils oder Auffanggehäuses und dann um einen ersten Steg und eine daneben liegende Nut und abschließend zwischen einem Wandteil des Stutzens oder Anschlussteils oder der Wand des Auffanggehäuses des Stutzens oder Anschlussteils für das Auffanggehäuse und dem ersten im Deckel oder Ringflansch vorgesehenen Dichtungsring geführt ist, wobei bei Aktivierung von mindestens zwei oder allen Dichtungsringen die beiden gegenüberliegenden Dichtungsringen bzw. der zweite und dritte Dichtungsring den S-förmig verlaufenden Behältersack in die Nut und gegen den am Stutzen oder Anschlussteil für das Auffanggehäuse vorgesehenen Steg drücken, wobei die druckbeaufschlagbaren Dichtringe mit Druckluft beaufschlagbare Dichtringe sind

Hierdurch wird gewährleistet, dass beim Entleeren von Schüttgütern aus einem Schüttgut aufgenommenen Behälter in einen schlauchförmigen Behältersack, der in dem Auffanggehäuse aufgenommen ist, das Schüttgut in diesen Behältersack auf einfache Weise abgegeben werden kann, ohne dass die Umgebungsluft kontaminiert wird. Nach dem Umfüllvorgang wird der zu befüllenden Behältersack von anderen Behältern getrennt und gleichzeitig abgedichtet. Hierzu wird der Deckel mit seiner Innenseite oder dem Ringflansch auf das Auffanggehäuse für einen Auffangsack, wie nachstehend beschrieben, aufgesetzt. Durch die vorteilhafte Anordnung der Dichtungsringe wird beim Aufsetzen bei allen Arbeitsschritten eine optimale Abdichtung erreicht, sodass keine Partikel des Schüttguts in die Umgebungsluft abgegeben werden.

Hierzu ist es vorteilhaft, dass an die mit Druckluft beaufschlagbaren Dichtungsringe je ein Versorgungskanal für Druckluft und an einen im Innenraum des im Aufnahmegehäuse vorgesehenen Auffangsack mindestens eine Druckluft-Messleitung vorgesehen ist.

Eine zusätzliche Möglichkeit ist gemäß einer Weiterbildung der Erfindung, dass die mit Druckluft beaufschlagbaren Dichtungsringe zumindest an eine Pumpe angeschlossen sind und jeweils einzeln oder gemeinsam mit Druckluft versorgt werden können.

Ferner ist es vorteilhaft, dass der Deckel oder Ringflansch eine rechteck- oder u-förmige Aussparung oder einen Ringraum aufweist, der auf den Stutzen, das Anschlussteil und/oder in der den Auffangsack verschließenden Stellung auf das Auffanggehäuse gesetzt werden kann.

Vorteilhaft ist es auch, dass die Dichtungsringe jeweils in eine zumindest nach einer Seite hin offene Aussparung eingesetzt sind und bei Aktivierung mit Druckluft an die Innenwand der Aussparung gepresst werden, während die aus der Aussparung herauszeigende Seite gegen einen Teil des Auffangsacks angepresst wird.

Vorteilhaft ist es, dass am Deckel oder Ringflansch ein Steg vorgesehen ist, der beim Absenken des Deckels oder Ringflanschs in die im Stutzen oder Anschlussteil für das Auffanggehäuse vorgesehene Nut eingeführt wird und dabei einen Teil des Behältersacks in die Nut zwischen den Steg und einer der gegenüberliegenden Dichtfläche drückt.

Erfindungsgemäß ist es vorgesehen, dass bei Aktivierung von mindestens zwei oder allen Dichtungsringen die beiden gegenüberliegenden Dichtungsringen bzw. der zweite und dritte Dichtungsring den S-förmig verlaufenden Behältersack in die Nut und gegen den am Stutzen oder Anschlussteil für das Auffanggehäuse vorgesehenen Steg drücken.

Auch ist es von Vorteil, dass bei Aktivierung von mindestens einem oder allen Dichtungsringen der erste Dichtungsring gegen einen Teil des Behältersacks und gegen das Wandteil des Anschlussteils drückt.

Es ist auch vorteilhaft, dass die drei koaxial angeordneten Dichtungsringe je nach Arbeitsvorgang oder Stellung des in das Gehäuse eingeführten Behältersacks jeweils einzeln, paarweise oder gemeinsam über eine Versorgungseinrichtung über Druckluftkanäle mit Druckluft beaufschlagt werden können.

Vorteilhaft ist es auch, dass die Dichtungsringe schlauchförmig und mit je einer innenliegenden und druckbeaufschlagbaren Kammer ausgebildet sind und einen rechteck-, mehreck-, kreisförmig oder ovalen Querschnitt aufweisen.

Auch ist es vorteilhaft, dass der Behältersack zwischen dem dritten oder unteren Dichtungsring und der gegenüberliegenden Wand des Aufnahmeteils oder Auffanggehäuses und dann um einen ersten Steg und die danebenliegende Nut und abschließend zwischen einem Wandteil des Stutzens oder Anschlussteils oder der Wand des Auffanggehäuses des Stutzens und dem ersten im Deckel oder Ringflansch vorgesehenen Dichtungsring geführt ist.

Weitere Vorteile und Einzelheiten der Erfindung sind in den Patentansprüchen und in der Beschreibung erläutert und in den Figuren dargestellt.

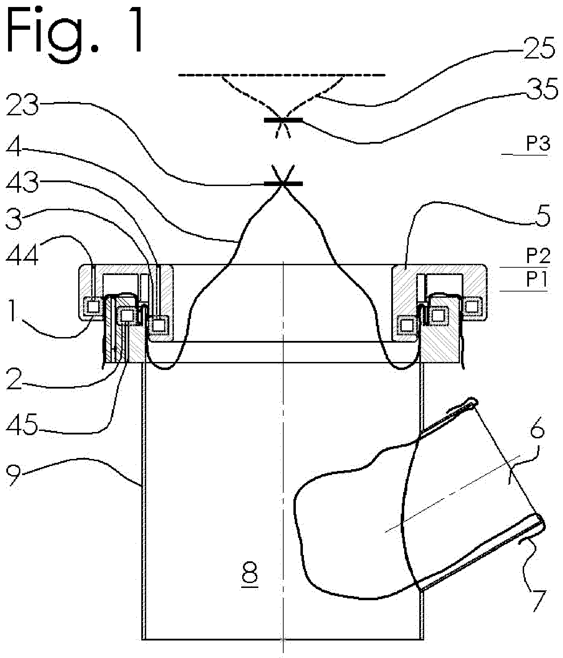

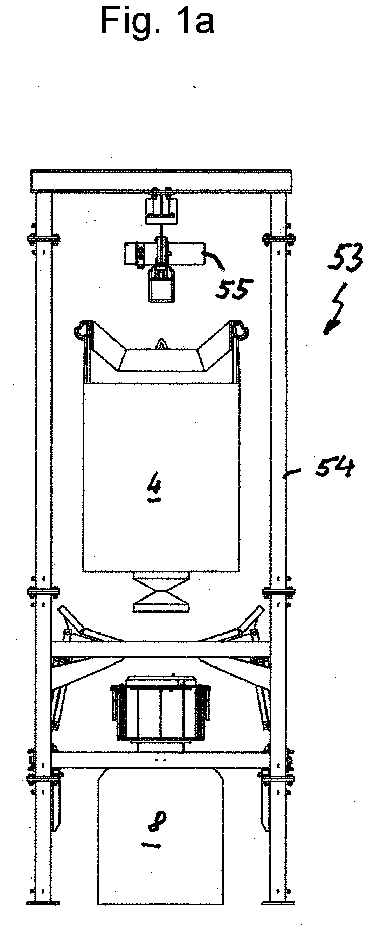

Die Figuren 1 bis 11 zeigen ein erstes Ausführungsbeispiel:
Figur 1 zeigt eine Teilansicht einer Vorrichtung zum Entleeren von Schüttgütern aus einem Behälter in einen schlauchförmigen Behältersack, der in einem Aufnahmeteil oder Auffanggehäuse aufgenommen und dessen eines oberes Ende nach dem Umfüllvorgang verschlossen werden kann.

In Fig. 1a ist eine Vorrichtung bzw. eine Gesamtanlage 53 zum Entleeren von Schüttgütern aus einem Behältersack 4 in einen schlauchförmigen Behältersack 8 dargestellt, der in einem Aufnahmeteil oder Auffanggehäuse 9 aufgenommen und dessen eines oberes Ende nach dem Umfüllvorgang verschlossen werden kann. Das zweite oder untere Ende des Behältersacks 4 wird mit Hilfe von mindestens drei mit Bezug auf eine Mittelachse des Auffanggehäuses 9 koaxial angeordneten Dichtungsringen 1, 2, 3 in nachfolgend beschriebenen Arbeitsschritten derart verschlossen, dass insbesondere beim Umfüllen des Schüttguts auch sehr kleine Partikel nicht nach außen in die Umgebungsluft abgegeben werden können.

Die Gesamtanlage 53 weist unter anderem mindestens ein Traggestell 54 auf (Fig.1b) in dem der mit Schüttgut befüllte Behältersack 4 mit Hilfe einer Hebeanlage bzw. einer elektrisch betriebenen Hebeanlage bzw. einem Seilzug 55 aufgenommen ist und in der Höhe verstellt werden kann, sodass das Schüttgut in den darunter vorgesehenen Auffangsack bzw. Behältersack 8 umgefüllt werden kann.

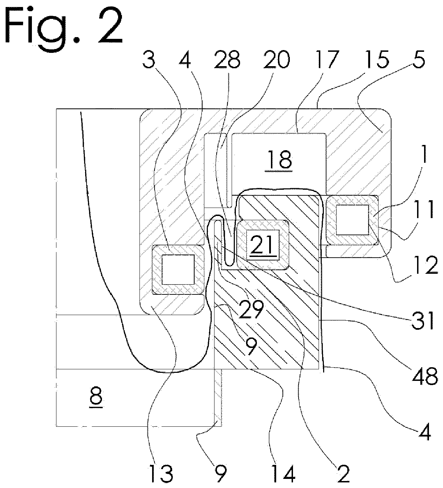

In Fig. 2 ist eine Teilansicht der Vorrichtung zum Entleeren von Schüttgütern aus dem Transportbehälter 4 in den schlauchförmigen Behältersack 8 dargestellt, der im Aufnahmeteil oder Auffanggehäuse 9 aufgenommen ist und dessen eines oberes Ende nach dem Umfüllvorgang verschlossen werden kannDer Deckel 5 kann aus einem Ringflansch bestehen, der an seiner Unterseite 51 eine rechteck- oder U-förmige nach unten offene Aussparung oder einen Ringraum 18, 20 aufweist, der auf den darunter liegenden koaxial angeordneten Stutzen oder das Anschlussteil 14 gesetzt werden kann.

Wie aus Fig. 2 ferner hervorgeht, sind die einzelnen über Druckluftkanäle 43, 44, 45 beaufschlagbaren Dichtungsringe 1, 2, 3 jeweils mit Bezug auf die Füllrichtung des Schüttguts nach unten versetzt zueinander angeordnet und der in Füllrichtung gesehen obere oder erste Dichtungsring 1 steht mit dem Deckel oder Ringflansch 5, der mittlere oder zweite Dichtungsring 2 mit einem Stutzen oder Anschlussteil 14 für das Auffanggehäuse 9 und der darunter liegende dritte, versetzt angeordnete Dichtungsring 3 mit dem Deckel oder Ringflansch 5 in Kontakt.

Der schlauchförmige Teil des Behältersacks 4 ist zwischen die eine Seite des dritten oder unteren Dichtungsrings 3 und der gegenüberliegenden Wand des Aufnahmeteils oder Auffanggehäuses 9, dann um einen ersten Steg 29 und eine daneben liegende Nut 28 und abschließend zwischen einem Wandteil 48 des Stutzens oder Anschlussteils 14 oder der Wand des Auffanggehäuses 9 des Stutzens 14 oder Anschlussteils für das Auffanggehäuse und dem ersten im Deckel oder Ringflansch 5 vorgesehenen Dichtungsring 1 geführt.

Der Deckel 5 weist einen Ringraum 18, 20 und zwei koaxial angeordnete Kammern 49,1 und 49,2 auf, die zu einer Seite hin offen sind und zur Aufnahme von einzeln oder gemeinsam druckbeaufschlagbaren Dichtungsringen 1, 2 dienen. Der zweite Dichtungsring 2 ist gegenüber dem ersten oberen ersten Dichtungsring etwas nach unten versetzt angeordnet.

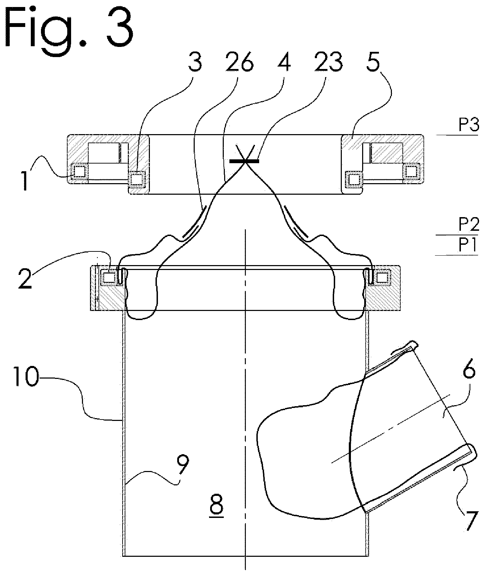

Gemäß Fig. 3 befindet sich der Deckel oder Ringflansch 5 in der höchsten Stellung P3 bevor er auf den Stutzen oder das Anschlussteil 14 für das Auffanggehäuse gesetzt wird, wobei der Inliner oder Behältersack 4 nach oben gezogen ist und mit Hilfe eines Klebestreifens 26 fixiert und der mittlere Dichtungsring noch aktiviert ist.

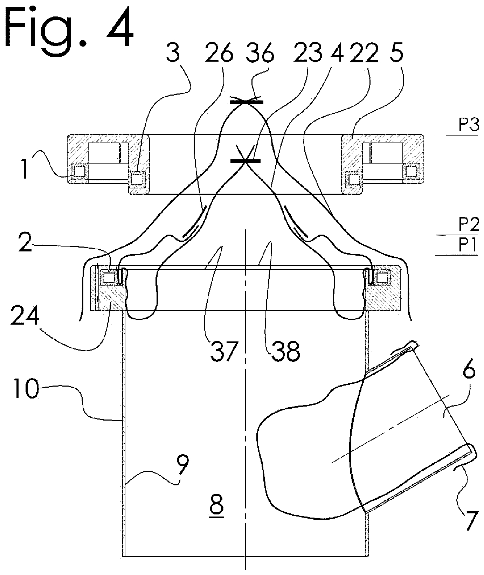

Gemäß Fig. 4 ist der Behältersack 4 noch im mittleren Dichtungsring 2 gehalten und abgedichtet und ein neuer Behältersack 22 wird über den vorherigen Behältersack 4 auf den Stutzen 14 gestülpt,

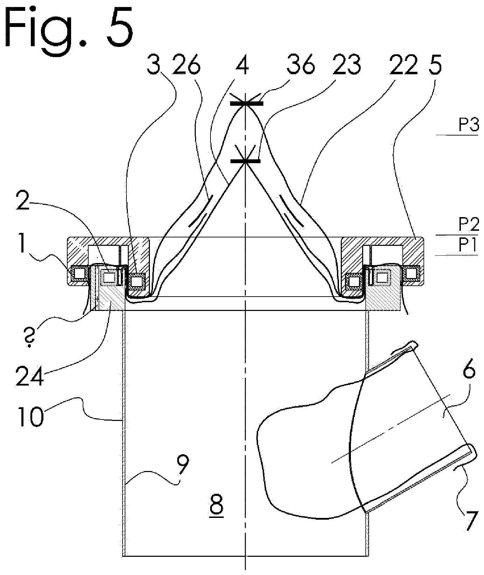

Im nächsten Arbeitsschritt gemäß Fig. 5 wird der Deckel 5 auf die mittlere Position P2 abgesenkt und der äußere Dichtungsring 1 aktiviert, wobei der mittlere Dichtungsring 2 aktiviert bleibt, den ersten Behältersack 4 hält und durch einen in einem Stutzen 24 vorgesehenen Luftkanal 39 einen definierten Druck abgibt. Ein Drucksensor prüft, ob der Druck gehalten werden kann bzw. die erforderliche Dichtigkeit des neuen Behältersacks 8 und/oder des Innenraums des Auffanggehäuse vorliegt.

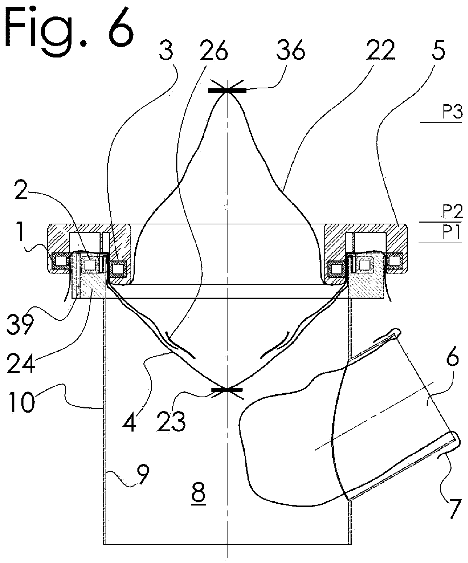

Fig. 6 zeigt, dass durch die Druckprobe sich der vorherige Behältersack 4 mit dem Schüttgut nach unten ausgeformt hat, wobei der mittlere Dichtungsring 2 nun deaktiviert werden kann und der Behältersack 4 durch den seitlichen Einlassstutzen 6 mit Inliner oder dem schlauchförmigen Behältersack 7 mittels der Hand ergriffen und entfernt werden kann. Bei diesem Arbeitsvorgang ist der äußere Dichtungsring 1 aktiviert und der innere Dichtungsring 2 noch nicht aktiviert.

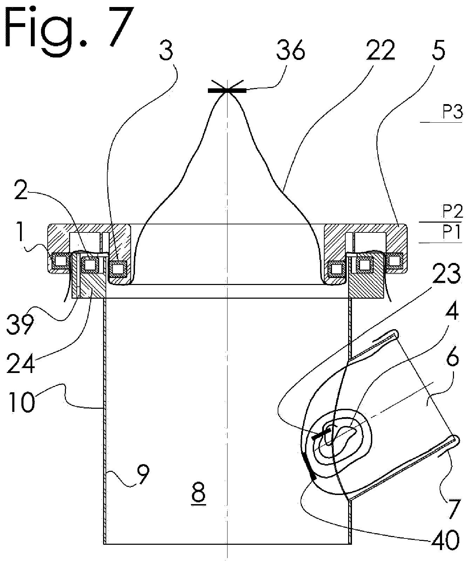

Gemäß Fig. 7 befindet sich der vorherige Inliner oder Behältersack 4 nun in einem schlauchförmigen Behältersack 7 des Einlassstutzens, wobei der Behältersack mit einem Verschluss 40 abgebunden ist, damit das Schüttgut in dem zu entnehmenden Behältersack 4 sicher eingeschlossen ist und auch die kleinsten Partikel nicht in die Umgebungsluft entweichen können und diese kontaminieren.

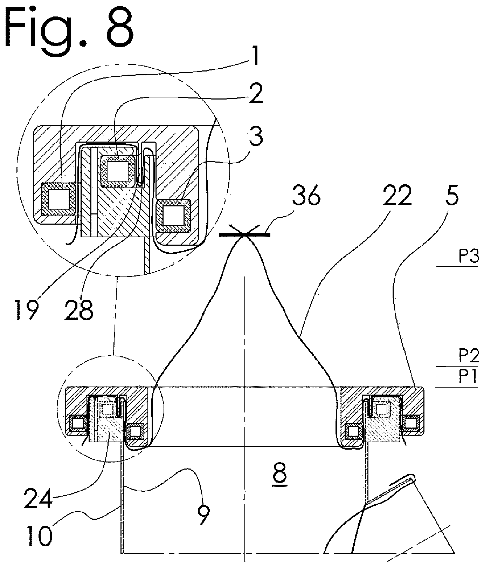

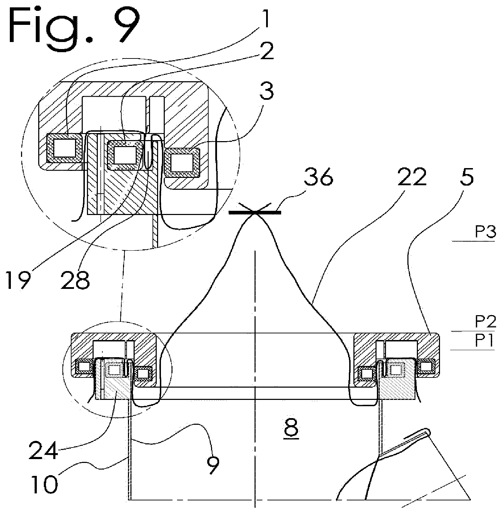

Aus Fig. 8 geht hervor, dass der Deckel 5 auf die unterste Position P1 abgesenkt ist und auf der Oberseite des Stutzens 24 liegt. Jetzt ist der äußere Dichtungsring 1 mit dem erforderlichen Druck derart beaufschlagt, dass der Behältersack 22 abgedichtet ist und gleichzeitig den Deckelhub in die Stellung gemäß Fig. 9. zulässt. Der am Deckel 5 angeordnete Steg 19 Fig. 8 drückt den Behältersack 22 umlaufend in die ringförmige Nut 28 der mittleren Dichtung 2. Die mittlere Dichtung 2 und der innere Dichtungsring 3 sind bei diesem Verfahrensschritt noch nicht aktiviert.

Fig. 9 zeigt den Deckel 5 in die mittlere Position P2 angehoben. Dabei ist der äußere Dichtungsring 1 mit dem erforderlichen Druck beaufschlagt, sodass der Behältersack 22 dicht ist und gleichzeitig den Deckelhub zulässt. Der Steg 19 des Deckels 5 wird dabei aus der Nut 28 des mittleren Dichtungsrings 2 gezogen und die Dichtungsringe 2 gleichzeitig mit einem definierten Druck aktiviert. Sobald der Deckel 5 die mittlere Position P2 erreicht hat, wird der mittlere Dichtungsring 2 mit vollem Druck versorgt. Der äußere Dichtungsring 1 und der innere Dichtungsring 3 werden ebenfalls mit vollem Druck aktiviert.

In Fig. 10 ist veranschaulicht, dass der Behältersack 22 aufgebunden bzw. noch nicht verschlossen ist und der Behältersack gemäß (Fig. 1, Pos. 25) entleert werden kann, wobei alle Dichtungsringe 1-3 mit vollem Druck aktiviert sind.

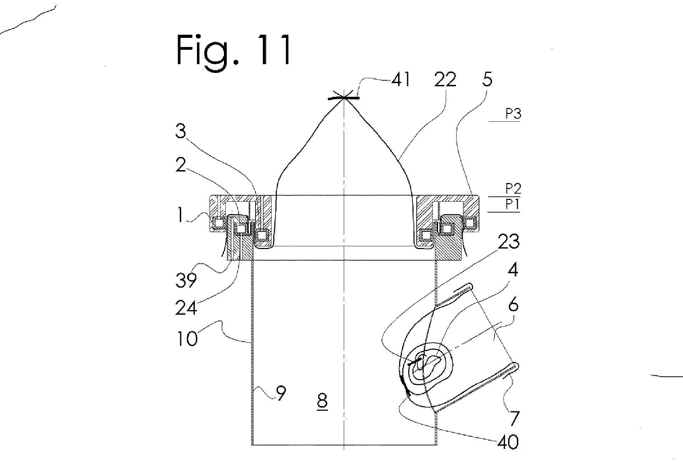

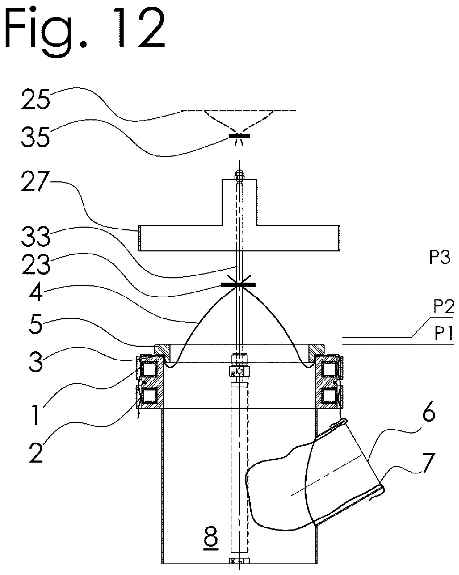

In Fig. 11 wird der Behältersack 22 nach der Entleerung des Behälters (Siehe Fig. 1, Pos. 25) mit einem Verschluss 41 verschlossen und über der Abbindestelle abgetrennt. Alle Dichtungsringe 1, 2 und 3 sind mit vollem Druck aktiviert. Dies entspricht der beschriebenen Ausgangssituation und der nächste Entleervorgang kann mit den zuvor beschriebenen Verfahrensschritten erfolgen.

### Bezugszeichenliste

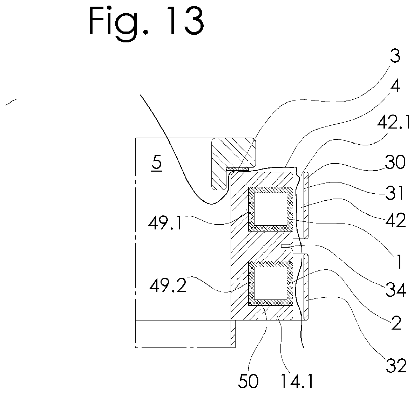

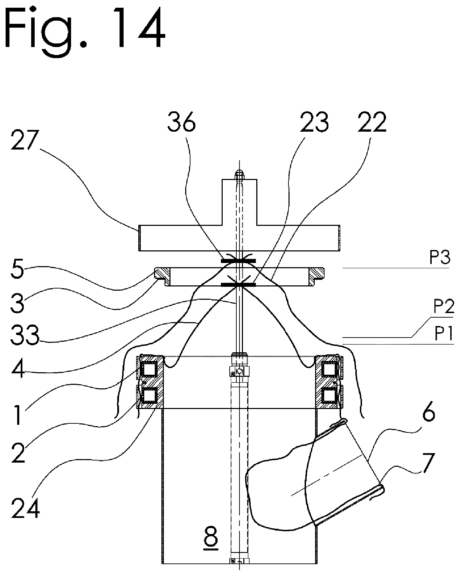

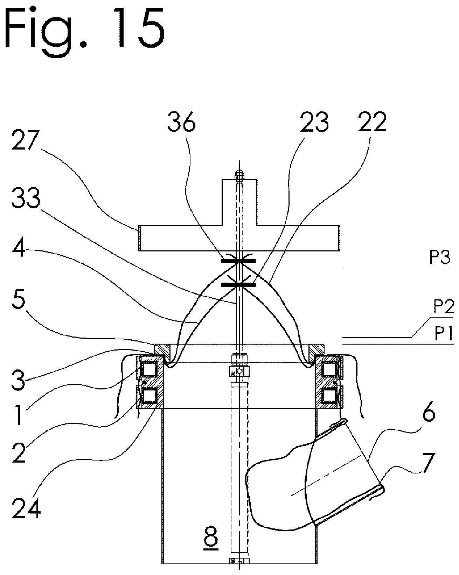

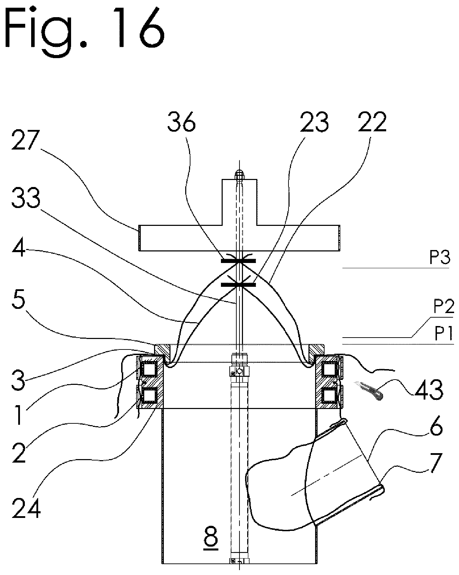

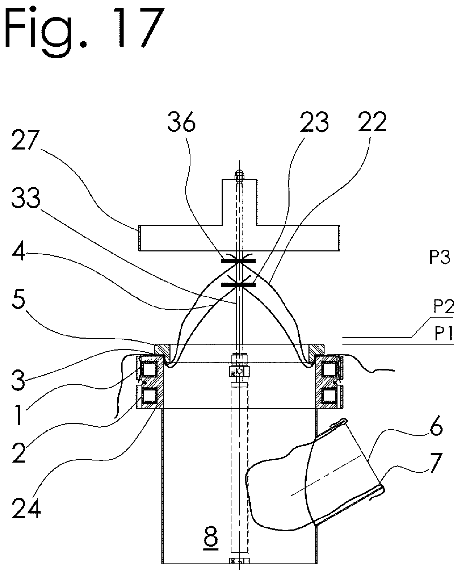

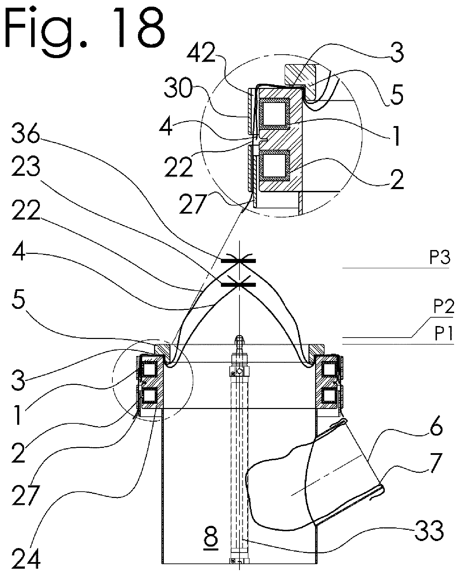

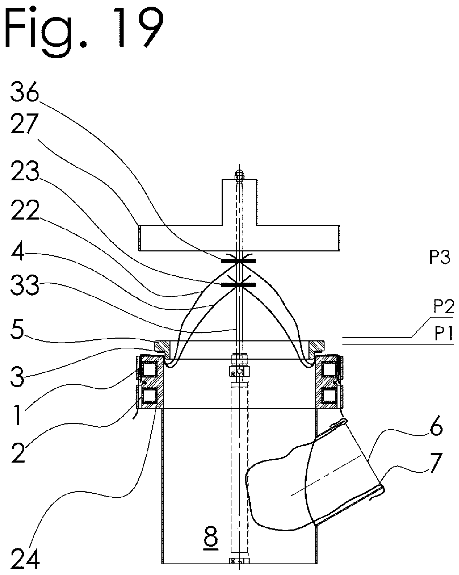

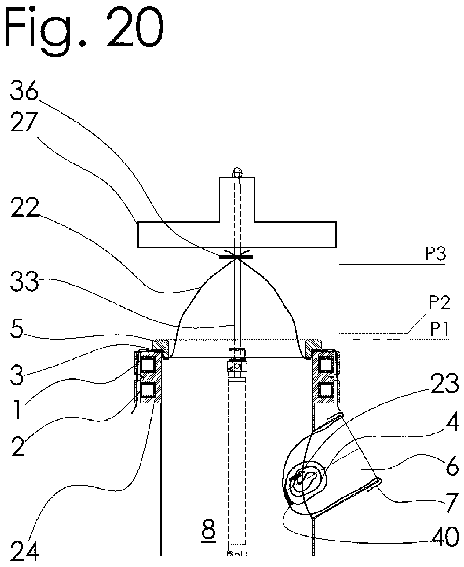

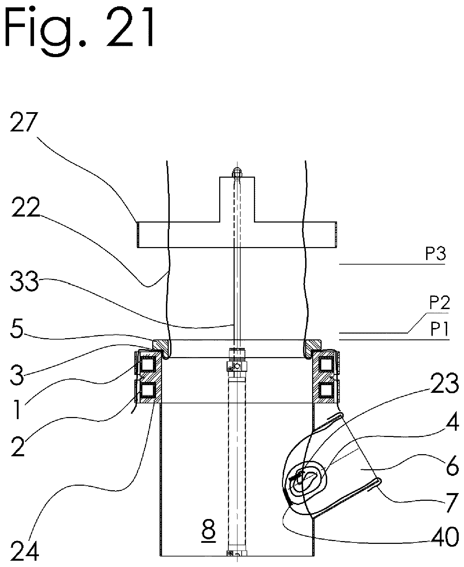

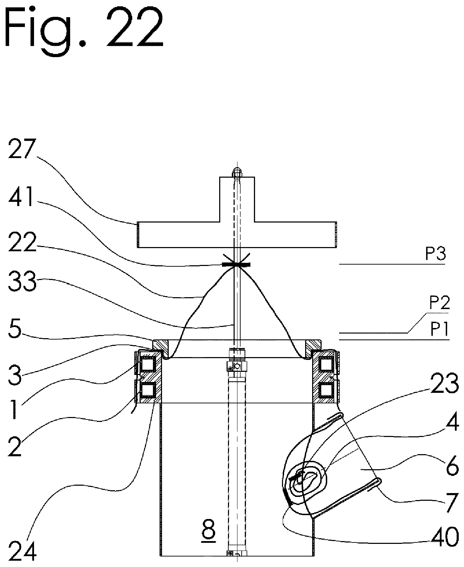

- 1: erster oder oberer Dichtungsring
- 2: zweiter oder mittlerer Dichtungsring
- 3: dritter oder unterer Dichtungsring
- 4: Inliner = Behältersack
- 5: Deckel, Ringflansch
- 6: Auslassstutzen, seitlich zur Entnahme des Inliners 4
- 7: Inliner = schlauchförmiger Behältersack
- 8: Bigbag, großer Auffangsack, Behältersack, Innenraum des Auffanggehäuses
- 9: Auffanggehäuse für Auffangsack
- 11: äußere Umrandung Dichtungsring 1
- 12: innere Umrandung Dichtungsring 1
- 13: L-Schenkel Deckel 5
- 14: Stutzen, Anschlussteil für Auffanggehäuse
- 14,1: Stutzen, Anschlussteil für Auffanggehäuse
- 15: obere Seite Deckel 5
- 16: Innenseite Deckel 5
- 17: Innenseite Deckel 5
- 18: Ringraum
- 19: Steg
- 20: Raum, leer
- 21: Kammer
- 22: Inliner 2 = Behältersack
- 23: Verschluss
- 24: Stutzen
- 25: Behälter = Transportbehälter
- 26: Klebestreifen
- 27: Einfädelring
- 28: Nut
- 29: erster Steg
- 30: Ringkörper mit innenliegender Dichtfläche 31
- 31: innenliegende Dichtfläche von 30
- 32: Dichtkörper
- 33: Antriebsvorrichtung
- 34: Führung des Messers
- 35: Verschlussteils
- 36: Verschlussteils oder Klipps
- 39: Luftkanal für Druckluft-Messleitung
- 40: Verschluss
- 41: Verschluss
- 42: Zwischenraum, Ringraum, Ringkanal
- 43: Druckluftkanal
- 44: Druckluftkanal Diese Zahlen müssen in der Zeichnung ergänzt werden
- 45: Druckluftkanal
- 48: Wandteil des Anschlussteils 14
- 49 1.: Kammer (Fig.13)
- 49 2.: Kammer
- 49 3.: Kammer
- 51: untere Seite Deckel oder Ringflansch 5
- 52: Innenseite Ringkanal
- 53: Gesamtanlage
- 54: Traggestell
- 55: Hebeanlage, Seilzug
- P1: Stellung, Position
- P2: Stellung, Position
- P3: Stellung, Position

### Beschreibung folgenden Begriffe wie folgt verwendet:

Koaxial ist in der Geometrie die Bezeichnung für übereinstimmende Rotationsachsen dreidimensionaler Elemente. Ein Koaxialkabel besteht beispielsweise aus einem Mittelleiter und der umgebenden Abschirmung. Ein Hubschrauber mit Koaxialrotor verwendet zwei Rotoren, die um dieselbe Achse rotieren. Wikipedia

Mit konzentrisch bezeichnet man etwas symmetrisch um eine gemeinsame Mitte Angeordnetes. Konzentrisch sind geometrische Figuren, wenn sie denselben Schwerpunkt besitzen. Wikipedia Mit konzentrisch (aus lateinisch *con "*mit" und *Centrum,* "Mittelpunkt"; also "mit einem [einzigen] Mittelpunkt") bezeichnet man etwas symmetrisch um eine gemeinsame Mittel Angeordnetes. Konzentrisch sind geometrische Figuren, wenn sie denselben Schwerpunkt besitzen.

## Patentansprüche

1. Vorrichtung zum Entleeren von Schüttgütern aus einem Behälter (25) in einen schlauchförmigen Behältersack (4), der in einem Aufnahmeteil oder Auffanggehäuse (9) aufgenommen und dessen eines oberes Ende nach dem Umfüllvorgang verschlossen werden kann, während das zweite oder untere Ende des Behältersacks (4) mit Hilfe von mindestens drei mit Bezug auf eine Mittelachse des Auffanggehäuses (9) koaxial angeordneten Dichtungsringen (1, 2, 3) derart verschlossen werden kann, dass insbesondere auch sehr kleine Partikel nicht nach außen in die Umgebungsluft abgegeben werden, wobei die einzelnen druckbeaufschlagbaren Dichtungsringe (1, 2, 3) jeweils versetzt zueinander angeordnet sind, **dadurch gekennzeichnet, dass** der in Füllrichtung gesehen obere oder erste Dichtungsring (1) mit einem Deckel oder Ringflansch (5) und der mittlere oder zweite Dichtungsring (2) mit einem Stutzen oder Anschlussteil (14) für das Auffanggehäuse (9) und der darunter liegende dritte, versetzt angeordnete Dichtungsring (3) mit dem Deckel oder Ringflansch (5) in Kontakt steht, wobei der schlauchförmige Teil des Behältersacks (4) zwischen die eine Seite des dritten oder unteren Dichtungsrings (3) und der gegenüberliegenden Wand des Aufnahmeteils oder Auffanggehäuses (9), dann um einen ersten Steg (29) und eine daneben liegende Nut (28) und abschließend zwischen einem Wandteil (48) des Stutzens oder Anschlussteils (14) oder der Wand des Auffanggehäuses (9) des Stutzens (14) oder Anschlussteils für das Auffanggehäuse und dem ersten im Deckel oder Ringflansch (5) vorgesehenen Dichtungsring (1) geführt ist, wobei bei Aktivierung von mindestens zwei oder allen Dichtungsringen (1 bis 3) die beiden gegenüberliegenden Dichtungsringen bzw. der zweite und dritte Dichtungsring (2, 3) den S-förmig verlaufenden Behältersack (4) in die Nut (28) und gegen den am Stutzen oder Anschlussteil für das Auffanggehäuse (14) vorgesehenen Steg (29) drücken, wobei die druckbeaufschlagbaren Dichtringe mit Druckluft beaufschlagbare Dichtringe sind.

2. Vorrichtung nach Anspruch 1, **dadurch gekennzeichnet, dass** an die über mit Druckluft beaufschlagbaren Dichtungsringe (1, 2, 3) je ein Versorgungskanal für Druckluft und an einen im Innenraum des im Aufnahmegehäuse vorgesehenen Auffangsack (8) mindestens eine Druckluft-Messleitung (39) vorgesehen ist.

3. Vorrichtung nach Anspruch 1 oder 2, **dadurch gekennzeichnet, dass** die mit Druckluft beaufschlagbaren Dichtungsringe (1, 2, 3) zumindest an eine Pumpe angeschlossen sind und jeweils einzeln oder gemeinsam mit Druckluft versorgt werden können.

4. Vorrichtung nach einem der vorhergehenden Ansprüche, **dadurch gekennzeichnet, dass** der Deckel oder Ringflansch (5) eine rechteck- oder U-förmige Aussparung oder einen Ringraum (18) aufweist, der auf den Stutzen, das Anschlussteil und/oder in der den Auffangsack (8) verschließenden Stellung auf das Auffanggehäuse (14) gesetzt werden kann.

5. Vorrichtung nach einem der vorhergehenden Ansprüche, **dadurch gekennzeichnet, dass** die Dichtungsringe jeweils in eine zumindest nach einer Seite hin offene Aussparung eingesetzt sind und bei Aktivierung mit Druckluft an die Innenwand der Aussparung gepresst werden, während die aus der Aussparung herauszeigende Seite gegen einen Teil des Auffangsacks (8) angepresst wird.

6. Vorrichtung nach einem der vorhergehenden Ansprüche, **dadurch gekennzeichnet, dass** das am Deckel oder Ringflansch (5) ein Steg (19) vorgesehen ist, der beim Absenken des Deckels oder Ringflanschs in die im Stutzen oder Anschlussteil für das Auffanggehäuse (14) vorgesehene Nut (28) eingeführt wird und dabei einen Teil des Behältersacks in die Nut zwischen den Steg (29) und einer gegenüberliegenden Dichtfläche (31) drückt.

7. Vorrichtung nach einem der vorhergehenden Ansprüche, **dadurch gekennzeichnet, dass** bei Aktivierung von mindestens einem oder allen Dichtungsringen (1 bis 3) der erste Dichtungsring (1) einen Teil des Behältersacks (4) gegen das Wandteil (48) des Anschlussteils (14) drückt.

8. Vorrichtung nach einem der vorhergehenden Ansprüche, **dadurch gekennzeichnet, dass** die drei koaxial angeordneten Dichtungsringe (1, 2, 3) je nach Arbeitsvorgang oder Stellung des in das Gehäuse (9) eingeführten Behältersacks (4) jeweils einzeln, paarweise oder gemeinsam über eine Versorgungseinrichtung mit Druckluft beaufschlagt werden können.

9. Vorrichtung nach einem der vorhergehenden Ansprüche, **dadurch gekennzeichnet, dass** die Dichtungsringe (1 bis 3) schlauchförmig und mit je einer innenliegenden und druckbeaufschlagbaren Kammer (21) ausgebildet sind und einen rechteck-, mehreck-, kreisförmig oder ovalen Querschnitt aufweisen.

## Claims

1. Device for emptying bulk materials from a container (25) into a tubular container bag (4), which can be received in a receiving part or collecting housing (9) and one upper end of which can be closed after the decanting process, while the second or lower end of the container bag (4) can be closed by means of at least three sealings rings (1, 2, 3) that are arranged coaxially with respect to a central axis of the collecting housing (9), in such a way that in particular also very small particles cannot be discharged towards the outside, into the ambient air, wherein the individual sealing rings (1, 2, 3), to which pressure can be applied, are in each case arranged so as to be offset from one another, **characterised in that** the upper or first sealing ring (1), viewed in the filling direction, is in contact with a cover or annular flange (5), and the central or second sealing ring (2) is in contact with a nozzle or connection part (14) for the collecting housing (9), and the third, offset sealing ring (3) therebelow is in contact with the cover or annular flange (5), wherein the tubular part of the container bag (4) is guided between one side of the third or lower sealing ring (3) and the opposite wall of the receiving part or collecting housing (9), then around a first rib (29) and an adjacent groove (28), and finally between a wall part (48) of the nozzle or connection part (14) or the wall of the collecting housing (9) of the nozzle (14) or connection part for the collecting housing and the first sealing ring (1) provided in the cover or annular flange (5), wherein upon activation of at least two or all sealing rings (1 to 3) the two opposing sealing rings or the second and third sealing ring (2, 3) press the container bag (4), extending in an S-shape, into the groove (28) and against the rib (29) provided on the nozzle or connection part for the collecting housing (14), wherein the sealing rings to which pressure can be applied are sealing rings to which compressed air can be applied.

2. Device according to claim 1, **characterised in that** in each case a supply channel for compressed air is provided on the sealing rings (1, 2, 3) to which compressed air can be applied, and at least one compressed air measuring line (39) is provided on a collecting bag (8) provided in the interior of the collecting housing.

3. Device according to either claim 1 or claim 2, **characterised in that** the sealing rings (1, 2, 3) to which compressed air can be applied are connected at least to a pump, and can in each case be supplied individually or together with compressed air.

4. Device according to any of the preceding claims, **characterised in that** the cover or annular flange (5) comprises a rectangular or U-shaped recess or an annular space (18), which can be placed on the nozzle, the connection part, and/or on the collecting housing (14) in the position closing the collecting bag (8).

5. Device according to any of the preceding claims, **characterised in that** the sealing rings are in each case inserted into a recess that is open at least towards one side, and can be pressed onto the inside wall of the recess upon activation with compressed air, while the side facing out of the recess is pressed against a part of the collecting bag (8) .

6. Device according to any of the preceding claims, **characterised in that** a rib (19) is provided on the cover or annular flange (5), which rib is introduced, upon lowering of the cover or annular flange, into the groove (28) provided in the nozzle or connection part for the collecting housing (14) and in the process presses a part of the container bag into the groove between the rib (29) and an opposing sealing surface (31).

7. Device according to any of the preceding claims, **characterised in that**, upon activation of at least one or all of the sealing rings (1 to 3), the first sealing ring (1) presses a part of the container bag (4) against the wall part (48) of the connection part (14).

8. Device according to any of the preceding claims, **characterised in that** the three coaxially arranged sealing rings (1, 2, 3) can be acted on by compressed air, via a supply device, in each case individually, in pairs, or together, depending on the work process or position of the container bag (4) introduced into the housing (9).

9. Device according to any of the preceding claims, **characterised in that** the sealing rings (1 to 3) are designed to be tubular, and each comprise an inner chamber (21) to which pressure can be applied, and have a rectangular, polygonal, circular, or oval cross-section.

## Revendications

1. Dispositif pour vider des produits en vrac d'un récipient (25) dans un sac récipient (4) en forme de tuyau, qui est reçu dans une partie de réception ou un boîtier de collecte (9) et dont une extrémité supérieure peut être fermée après le processus de transvasement, tandis que la deuxième extrémité ou l'extrémité inférieure du sac récipient (4) peut être fermée à l'aide d'au moins trois bagues d'étanchéité (1, 2, 3) agencées coaxialement par rapport à un axe central du boîtier de collecte (9) de telle sorte que notamment même de très petites particules ne sont pas libérées vers l'extérieur dans l'air ambiant, les bagues d'étanchéité individuelles (1, 2, 3) pouvant être soumises à une pression étant respectivement agencées en décalage les unes par rapport aux autres, **caractérisé en ce que** la bague d'étanchéité supérieure ou première bague d'étanchéité (1), vue dans la direction de remplissage, est en contact avec un couvercle ou une bride annulaire (5) et la bague d'étanchéité intermédiaire ou deuxième bague d'étanchéité (2) est en contact avec une tubulure ou une pièce de raccordement (14) pour le boîtier de collecte (9) et la troisième bague d'étanchéité située en dessous, agencée en décalage, est en contact avec le couvercle ou la bride annulaire (5), la partie tubulaire du sac récipient (4) étant guidée entre l'un des côtés de la troisième bague d'étanchéité ou bague d'étanchéité inférieure (3) et la paroi opposée de la partie de réception ou boîtier de collecte (9), ensuite autour d'une première nervure (29) et d'une rainure (28) située à côté et finalement entre une partie de paroi (48) de la tubulure ou de la pièce de raccordement (14) ou de la paroi du boîtier de collecte (9) de la tubulure (14) ou de la pièce de raccordement pour le boîtier de collecte et la première bague d'étanchéité (1) prévue dans le couvercle ou la bride annulaire (5) ; lors de l'activation d'au moins deux ou de toutes les bagues d'étanchéité (1 à 3), les deux bagues d'étanchéité opposées, respectivement la deuxième et la troisième bague d'étanchéité (2, 3) pressant le sac récipient (4) s'étendant en forme de S dans la rainure (28) et contre la nervure (29) prévue sur la tubulure ou la pièce de raccordement pour le boîtier de collecte (14), les bagues d'étanchéité pouvant être soumises à une pression étant des bagues d'étanchéité pouvant être soumises à de l'air comprimé.

2. Dispositif selon la revendication 1, **caractérisé en ce qu'**il est prévu un canal d'alimentation pour l'air comprimé sur chacune des bagues d'étanchéité (1, 2, 3) pouvant être soumises à de l'air comprimé et au moins une conduite de mesure d'air comprimé (39) sur un sac de collecte (8) prévu dans l'espace intérieur du boîtier de réception.

3. Dispositif selon la revendication 1 ou 2, **caractérisé en ce que** les bagues d'étanchéité (1, 2, 3) pouvant être soumises à de l'air comprimé sont raccordées à au moins une pompe et peuvent être alimentées en air comprimé individuellement ou conjointement.

4. Dispositif selon l'une quelconque des revendications précédentes, **caractérisé en ce que** le couvercle ou la bride annulaire (5) présente un évidement en forme de rectangle ou de U ou un espace annulaire (18), qui peut être placé sur la tubulure, la pièce de raccordement et/ou, dans la position fermant le sac de collecte (8), sur le boîtier de collecte (14) .

5. Dispositif selon l'une quelconque des revendications précédentes, **caractérisé en ce que** les bagues d'étanchéité sont chacune insérées dans un évidement ouvert au moins d'un côté et sont pressées contre la paroi intérieure de l'évidement lorsqu'elles sont activées par de l'air comprimé, tandis que le côté tourné vers l'extérieur de l'évidement est pressé contre une partie du sac de collecte (8).

6. Dispositif selon l'une quelconque des revendications précédentes, **caractérisé en ce qu'**il est prévu sur le couvercle ou la bride annulaire (5) une nervure (19) qui, lors de l'abaissement du couvercle ou de la bride annulaire, est introduite dans la rainure (28) prévue dans la tubulure ou la pièce de raccordement pour le boîtier de collecte (14) et presse ainsi une partie du sac récipient dans la rainure entre la nervure (29) et une surface d'étanchéité (31) opposée.

7. Dispositif selon l'une quelconque des revendications précédentes, **caractérisé en ce que**, lors de l'activation d'au moins une ou de toutes les bagues d'étanchéité (1 à 3), la première bague d'étanchéité (1) presse une partie du sac récipient (4) contre la partie de paroi (48) de la pièce de raccordement (14).

8. Dispositif selon l'une quelconque des revendications précédentes, **caractérisé en ce que** les trois bagues d'étanchéité (1, 2, 3) agencées coaxialement peuvent être soumises à de l'air comprimé individuellement, par paires ou ensemble par un dispositif d'alimentation, selon l'opération ou la position du sac récipient (4) introduit dans le boîtier (9) .

9. Dispositif selon l'une quelconque des revendications précédentes, **caractérisé en ce que** les bagues d'étanchéité (1 à 3) sont configurées sous forme tubulaire et avec chacune une chambre (21) située à l'intérieur et pouvant être soumises à une pression, et présentent une section transversale rectangulaire, polygonale, circulaire ou ovale.
